# EUROPÄISCHE PATENTSCHRIFT

(11) **EP 3 913 537 B1**
(45) Veröffentlichungstag und Bekanntmachung des Hinweises auf die Patenterteilung: **06.09.2023**
(21) Anmeldenummer: 21175660.6
(22) Anmeldetag: 25.05.2021
(51) Int. Cl.: G06K 19/06, G06K 7/14, G06V 10/24, G06V 10/20

(54) **VERFAHREN ZUR ERKENNUNG OPTISCHER MARKER**
METHOD FOR DETECTING OPTICAL MARKERS
PROCÉDÉ DE DÉTECTION DES MARQUEURS OPTIQUES

(30) Priorität: 22.05.2020 DE 102020206398
(43) Veröffentlichungstag der Anmeldung: 24.11.2021
(73) Patentinhaber: Robert Bosch GmbH, 70442 Stuttgart (DE)
(72) Erfinder: Knorr, Moritz Michael, 31139 Hildesheim (DE)

(56) Entgegenhaltungen:
- Author ET AL: "Entwurf und Erkennung von codierten Zielmarken Entwurf und Erkennung von codierten Zielmarken HANS-GERD MAAS", , 31. Dezember 1997 (1997-12-31), XP055492310, DOI: 10.3929/ethz-a-004332841 Gefunden im Internet: URL:https://www.research-collection.ethz.c h/bitstream/handle/20.500.11850/146246/eth -25192-01.pdf [gefunden am 2018-07-12]

## Beschreibung

### Stand der Technik

Die vorliegende Erfindung betrifft ein Verfahren zur Erkennung optischer Marker.

Bekannt ist die Verwendung optischer Marker in der maschinellen Bildverarbeitung und in der Photogrammetrie, zum Beispiel als Hilfsmittel zur Vermessung von Flächen oder Objekten. Derartige Marker dienen dabei meist als Referenzpunkte. Um mehrere Marker eindeutig unterscheiden zu können, sind diese teilweise codiert. Beispielsweise können binäre Kodierungen verwendet werden, wobei die Marker üblicherweise verschiedene Bereiche mit starken Kontrastfarben aufweisen. Je nach Aufnahmebedingungen und Kameraeigenschaften sind die Kontraste in einem aufgenommenen Bild des Markers jedoch häufig nicht stark genug, sodass eine einfache Segmentierung oft nicht einfach möglich ist. Insbesondere bei schräger Aufnahme des Markers, sodass dieser im aufgenommenem Bild verzerrt ist, ist eine präzise Detektion häufig nur unter ansonsten optimalen Bedingungen zuverlässig möglich.

Niederöst, M.; Maas, H.-G.: "Entwurf und Erkennung von codierten Zielmarken", 31. Dezember 1997, XP055492310 beschreibt ein Verfahren zum Entwurf und zur Erkennung von codierten optischen Zielmarken, bei welchem auch projektiv verzerrte Zielmarken korrekt erkannt werden sollen.

### Offenbarung der Erfindung

Das erfindungsgemäße Verfahren mit den Merkmalen des Anspruchs 1 zeichnet sich demgegenüber dadurch aus, dass mit einfachen Mitteln und auch unter schwierigen Randbedingungen eine präzise und zuverlässige Erkennung von optischen Markern ermöglicht wird. Dies wird erreicht durch ein Verfahren zur Erkennung optischer Marker, welches zunächst den Schritt eines Bereitstellens eines optischen Markers umfasst. Der Marker weist dabei ein Markerzentrum und zumindest zwei das Markerzentrum umgebende Ringe auf. Insbesondere definiert das Markerzentrum dabei einen Mittelpunkt des Markers. Jeder der

Ringe weist eine Vielzahl an Sektoren auf. Vorzugsweise weisen die beiden Ringe jeweils dieselbe Anzahl an Sektoren auf. Jeder Sektor weist dabei genau eine von zumindest zwei Farben auf, sodass jeder Ring einen Code bildet. Der Code ist dabei insbesondere durch die Farbfolge der Sektoren entlang der Umfangsrichtung des Rings gebildet. Vorzugsweise steht jede Farbe und somit jeder Sektor für eine bestimmte Zahl, sodass jeder Ring einen Zahlencode aufweist. Besonders bevorzugt handelt es sich dabei um Farben, welche sich stark kontrastreich voneinander abheben, um eine eindeutige Unterscheidung zu ermöglichen. Beispielsweise kann es sich um Komplementärfarben handeln. Vorzugsweise ist der Code ein binärer Code und insbesondere sind genau zwei Farben vorgesehen, wobei ein Sektor der einen Farbe für "Null" und ein Sektor der anderen Farbe für "Eins" steht.

Ein erster Ring ist dabei bezüglich des Markerzentrums punktsymmetrisch ausgebildet. Ein zweiter Ring ist bezüglich des Markerzentrums punkt-antisymmetrisch ausgebildet. Insbesondere bezieht sich die Punktsymmetrie bzw. Punkt-Antisymmetrie dabei auf die Farben der Sektoren. Das heißt, im Falle des zweiten Rings weisen zwei punktsymmetrisch angeordnete Sektoren jeweils konträre Farben auf. Dadurch bilden die Sektoren des zweiten Rings genau einen Code und den inversen Code. Die Sektoren des ersten Rings bilden dagegen einen bestimmten Code genau doppelt. Mit anderen Worten ist die Farbverteilung der Sektoren des ersten Rings punktsymmetrisch und die Farbverteilung der Sektoren des zweiten Rings punkt-antisymmetrisch. Weiterhin umfasst das Verfahren die Schritte:
- Erfassen eines Bilds des optischen Markers;
- Erkennen des Markerzentrums im Bild;
- Subtraktion von Farbwerten von bezüglich dem Markerzentrum punktsymmetrischer Bereiche des Bilds;
- Ermitteln einer Transformation, welche eine Verzerrung des optischen Markers im Bild widerspiegelt, basierend auf dem Ergebnis der Subtraktion; und
- Lesen des Codes basierend auf der ermittelten Transformation.

Mit anderen Worten wird zunächst ein Bild einer Umgebung aufgenommen, in welcher sich der optische Marker befindet. Beispielsweise kann dabei eine Aufnahme des Bilds schräg zu einer Ebene, in welcher sich der Marker befindet, erfolgen, sodass der Marker im Bild verzerrt dargestellt ist. Vor einer Analyse des Markers erfolgt zunächst die Erkennung des Markerzentrums im Bild, um einen Referenz-Mittelpunkt zu erhalten. Anschließend werden Farbwerte, vorzugsweise Grauwerte, von Bereichen des aufgenommenen Bilds, welche bezüglich dem Markerzentrum punktsymmetrisch angeordnet sind, voneinander subtrahiert. Daraus resultiert vorzugsweise ein virtuelles Bild mit den Differenzen der Grauwerte des aufgenommenen Bilds. Durch die Subtraktion ergeben sich somit im virtuellen Bild an den Bereichen, welche dem ersten Ring entsprechen, geringe Differenzen, wobei an den dem zweiten Ring entsprechenden Bereichen hohe Differenzen vorliegen. Somit kann anhand des virtuellen Bildes ein Maß der Verzerrung des optischen Markers, insbesondere im Vergleich zu einem genau orthogonal aufgenommenen Bild des Markers, ermittelt werden. Dies wird in Form einer Transformation ermittelt, welche auf der Subtraktion basiert. Anschließend wird der Code in jedem der beiden Ringe basierend auf der ermittelten Transformation gelesen. Besonders bevorzugt wird der Code dabei entlang genau einer Richtung, vorzugsweise im Urzeigersinn oder im Gegenuhrzeigersinn, gelesen.

Aufgrund der punktsymmetrischen bzw. punkt-antisymmetrischen Konfiguration der beiden Ringe steht in jedem dieser Ringe somit nur die Hälfte der Sektoren zur Bildung des Codes zur Verfügung. Das heißt, dass in jedem der beiden Ringe die dem jeweiligen Code entsprechenden Informationen zweimal enthalten sind, wobei im zweiten Ring der Code entsprechend einmal invers vorhanden ist. Durch dieses doppelte Vorhandensein jedes Codes ergibt sich der Vorteil, dass eine besonders hohe Robustheit des Verfahrens erreicht werden kann. Insbesondere können mögliche Fehler bei der Detektion und Analyse des Markers leicht erkannt werden. Weiterhin erlaubt die Analyse des Bilds mittels der Transformation eine besonders einfache und präzise Erkennung der im optischen Marker gespeicherten Informationen, auch bei signifikanter Verzerrung des Markers im aufgenommenen Bild. Dadurch kann das Verfahren mit einfacher und kostengünstiger Hardware, welche vergleichsweise geringe Anforderungen an die Abbildungsqualität bei der Aufnahme des Bildes stellt, ausgeführt werden. Insbesondere ist hierbei auch bei unscharfen Bildern, ungünstigen Lichtverhältnissen, Bildstörungen oder bei einer hohen Entfernung eine zuverlässige und genaue Erkennung und Analyse des Markers möglich ist.

Bevorzugt sind die beiden Ringe kreisringförmig. Insbesondere sind die Sektoren somit Kreisringssektoren der Kreisringe. Vorzugsweise ist der gesamte optische Marker kreisförmig. Dadurch kann der optische Marker auf besonders einfache Art und Weise erzeugt werden. Zudem ist eine optimale Flächenausnutzung, das heißt eine Darstellbarkeit von möglichst vielen Informationen in einem Marker mit möglichst kleiner Gesamtfläche, möglich.

Die Unteransprüche haben bevorzugte Weiterbildungen der Erfindung zum Inhalt.

Besonders bevorzugt wird die Transformation in Form von Ellipsenparametern des verzerrten optischen Markers ermittelt. Das heißt, eine verzerrte Abbildung der kreisringförmigen Ringe durch ein schräges Erfassen des Bilds führt dazu, dass die Ringe im Bild elliptisch sind. Anhand der Subtraktion der Farbwerte der bezüglich dem Markerzentrum punktsymmetrischen Bereiche des Bilds können die Ellipsenparameter dieser elliptischen Form ermittelt werden, sodass basierend darauf das Lesen des Codes besonders genau erfolgen kann. Vorzugsweise werden als Ellipsenparameter dabei ein Verhältnis der Länge der beiden Halbachsen des elliptischen Markers im Bild ermittelt. Dadurch kann auf besonders einfache Art und Weise eine sehr präzise Erfassung der beiden Ringe erfolgen.

Vorzugsweise werden die Ellipsenparameter basierend auf den Bereichen mit den höchsten Differenzen der Farbwerte nach der Subtraktion ermittelt. Die höchsten Differenzen liegen dabei insbesondere am zweiten Ring mit den punkt-antisymmetrischen Sektoren vor. Besonders günstig ist es dabei, wenn eine Erfassung der Sektoren anhand einer Abwicklung, insbesondere eines im Bild auf den verzerrten Marker projizierten virtuellen und ideal kreisförmigen Markers, erfolgt. Beispielsweise würden bei einem solchen virtuellen und ideal kreisförmigen Marker die höchsten Differenzen in der Abwicklung in einer geraden Linie liegen. Bei einer Verzerrung des optischen Markers im Bild ist die Linie, auf der die höchsten Differenzen liegen jedoch gekrümmt. Anhand der Krümmung der Linie können beispielsweise die Ellipsenparameter festgestellt werden.

Bevorzugt wird eine virtuelle Ellipse mit den ermittelten Ellipsenparametern in das Bild des optischen Markers auf einen der beiden verzerrten Ringe gelegt. Dabei erfolgt das Lesen des Codes, indem die Sektoren des Rings entlang einer Umfangsrichtung der virtuellen Ellipse erfasst werden. Beispielsweise kann dabei für jeden der beiden Ringe eine separate virtuelle Ellipse erzeugt werden. Die virtuelle Ellipse dient somit als Referenzgeometrie, welche auf das erfasste Bild des optischen Markers projiziert wird. Durch das bekannte Markerzentrum und durch die vorher bestimmten Ellipsenparameter kann die virtuelle Ellipse beispielsweise genau so in das Bild eingefügt werden, dass diese mittig auf einem der Ringe liegt. Alternativ kann genau eine virtuelle Ellipse in das Bild projiziert werden. Bei dem Schritt des Lesens des Codes kann das Bild somit genau im Bereich der Ellipse abgetastet werden um somit besonders präzise den Code der Ringe zu erfassen.

Vorzugsweise wird beim Lesen ein Startpunkt ermittelt, von welchem ausgehend der durch die Sektoren des Rings gebildete Code gelesen wird. Der Startpunkt ist dabei durch eine vordefinierte Farbfolge einer vorbestimmten Anzahl an, insbesondere in Umfangsrichtung des Rings, aufeinanderfolgenden Sektoren gebildet. Vorzugsweise wird der Startpunkt durch eine vordefinierte Anzahl an aufeinanderfolgenden Sektoren gleicher Farbe und einem anschließenden Sektor anderer Farbe gebildet. Wird beispielsweise ein Markerzentrum in Form einer Schachbrettecke verwendet, ergeben sich aufgrund der Symmetrie nur zwei mögliche Startpunkte. Dabei könnten beispielsweise eine der folgenden Farbkombinationen von Sektoren verwendet werden, um einen besonders einfachen und eindeutig zu identifizierenden Startpunkt zu erhalten: weiß, weiß, weiß, schwarz oder weiß, weiß, schwarz, weiß. Bei einem alternativen Markerzentrum, wie beispielsweise einem rotationssymmetrischen Markerzentrum, ist die Folge an vordefinierten Sektoren vorteilhafterweise noch um weitere Sektoren einer vordefinierten Farbe erweitert. Vorzugsweise beginnt der Code im Ring mit dem Sektor, welche in Umfangsrichtung an den letzten Sektor des Starpunkts angrenzt. Der Startpunkt ermöglicht somit ein eindeutiges Definieren und Finden eines Beginns des Codes, sodass durch den Ring ein eindeutiger Code vorgegeben werden kann. Insbesondere kann anhand des Startpunkts auch eine fehlerhafte Erfassung des Bildes des optischen Markers erkannt werden, beispielsweise wenn die Erkennung des Startpunkts fehlschlägt. Dieser Fall kann beispielsweise auftreten, wenn der optische Marker gespiegelt erfasst wurde.

Vorzugsweise weist der zweite Ring den Startpunkt auf. Besonders bevorzugt ist in dem optischen Marker ein einziger Startpunkt vorgesehen, welcher ausschließlich im zweiten Ring vorgesehen ist. Vorteilhafterweise wird das Lesen des Codes des ersten Rings dabei radial fluchtend mit dem Startpunkt im zweiten Ring begonnen. Das heißt, der Startpunkt wird ausgehend vom zweiten Ring in radialer Richtung auch in den ersten Ring projiziert, sodass der Beginn des Codes auch im ersten Ring eindeutig definiert ist.

Weiter bevorzugt weist jeder Sektor einen identischen Mittelpunktswinkel auf. Insbesondere wird der Mittelpunktswinkel dabei ausgehend vom Markerzentrum betrachtet. Die Sektoren des ersten Rings sind dabei gegen die Sektoren des zweiten Rings um den halben Mittelpunktswinkel verdreht. Mit anderen Worten sind die beiden Ringe um eine halbe Sektorbreite gegeneinander verdreht. Dadurch wird verhindert, dass die radial ausgerichteten Berandungen der Sektoren der beiden Ringe miteinander fluchten, wodurch eine Unterscheidung der einzelnen Sektoren bei ungünstigen Umgebungsbedingungen oder niedriger Bildauflösung weiter vereinfacht wird. Desweiteren wird an diesen Bereichen sich treffender Sektoren der verschiedenen Ringe vorzugsweise verhindert, dass ein Kreuzungspunkt in Form einer Schachbrettecke erzeugt wird, insbesondere um Fehldetektionen zu vermeiden.

Besonders bevorzugt erfolgt zur Subtraktion der Farbwerte der punktsymmetrisch angeordneten Sektoren ein radiales Abtasten des Markers ausgehend vom Markerzentrum und entlang einer Vielzahl von sich strahlenförmig vom Markerzentrum aus erstreckenden Strahlen. Mit anderen Worten erfolgt das Erfassen des optischen Markers durch radiales Abtasten des Markers ausgehend vom Markerzentrum und entlang der Strahlen. Vorzugsweise ist dabei eine Vielzahl an Strahlen vorgesehen, insbesondere mindestens eine Anzahl welche dem doppelten, vorzugsweise dem dreifachen, insbesondere dem vierfachen, der Anzahl an Sektoren pro Ring entspricht. Besonders bevorzugt erfolgt dabei das Erfassen entlang jedem der Strahlen an gleichmäßig voneinander entfernten Punkten. Das heißt, es wird ausgehend vom Markerzentrum und entlang jedes Strahls in regelmäßigen Abständen der Grauwert des Bildes an bestimmten Punkten erfasst. Dadurch kann das Bild besonders einfach und schnell abgetastet werden.

Vorzugsweise ist der zweite Ring radial außerhalb des ersten Rings angeordnet. Diese Reihenfolge ist besonders günstig, um eine möglichst präzise Erkennung des optischen Markers zu erhalten. Aufgrund der radial nach außen im Vergleich zum ersten Ring größer skalierten Sektoren des zweiten Rings und da vor allem der zweite Ring entscheidend für die Ermittlung der Ellipsenparameter ist, kann durch diese Reihenfolge eine besonders hohe Genauigkeit und auch Robustheit des Verfahrens erreicht werden.

Bevorzugt weist der optische Marker ferner einen einfarbigen Endring auf, welcher radial außerhalb der weiteren Ringe, also insbesondere radial außerhalb des ersten Rings und des zweiten Rings, angeordnet ist. Der Endring definiert insbesondere ein Stoppkriterium für das radiale Abtasten des Markers ausgehend vom Markerzentrum. Vorzugsweise kann somit der Schritt des Subtrahierens und des Lesens des Codes auf den Bereich radial innerhalb des Endrings limitiert werden, sodass Fehler bei der Erkennung vermieden werden können und die Robustheit des Verfahrens weiter erhöht werden kann.

Besonders bevorzugt ist das Markerzentrum in Form einer Schachbrettecke oder in Form eines einfarbigen Punkts, welcher von einem einfarbigen Ring anderer Farbe umgeben ist, gebildet. Ein derartiges Markerzentrum kann mit einfachen Mitteln sehr präzise bestimmt werden, sodass der Mittelpunkt des Markers zuverlässig und genau festgestellt werden kann. Als Schachbrettecke wird dabei eine Anordnung aus vier zu einem Mittelpunkt punktsymmetrisch angeordneten Flächen angesehen, wobei jeweils zwei sich dem Mittelpunkt gegenüberliegende Flächen dieselbe Farbe aufweisen und jeweils zwei in Umfangsrichtung benachbart angeordnete Flächen unterschiedliche Farben aufweisen. Vorzugsweise unterscheiden sich die Farben dabei kontrastreich voneinander, um eine genaue und zuverlässige Detektion und Lokalisierung zu erlauben.

Weiter bevorzugt weist jeder Ring mindestens 16 Sektoren auf. Aufgrund der Symmetrie bzw. Antisymmetrie der beiden Ringe stehen somit pro Ring 8 Sektoren zur Verfügung, welche eine Information für den Code aufweisen können. Insbesondere stehen somit pro Ring 8 Bit an Informationen zur Verfügung. Vorzugsweise werden dabei jedoch einige Bits zur Codierung des Startpunkts benötigt.

Vorzugsweise ist jeder Sektor entweder in schwarzer oder weißer Farbe gehalten. Durch den hohen Kontrast von Schwarz und Weiß kann der optische Marker somit mit besonders einfachen Mitteln erkannt und analysiert werden. Dies erlaubt beispielsweise auch die Aufnahme des Markers mittels Grauwertkameras, oder alternativ bevorzugt mittels Farbkameras.

Die Erfindung führt weiterhin zu einer Steuervorrichtung, welche eingerichtet ist zur Durchführung des beschriebenen Verfahrens. Dabei ergeben sich die vorteilhaften Ausgestaltungen und Weiterbildungen mit den vorstehend genannten Merkmalen sowie die generellen Vorteile des erfindungsgemäßen Verfahrens und die jeweils damit verbundenen technischen Effekte. Zur Vermeidung von Wiederholungen wird deshalb auf eine erneute Aufzählung verzichtet.

Ferner führt die Erfindung zu einem System zur Erkennung optischer Marker. Das System umfasst eine Erfassungsvorrichtung, welche eingerichtet ist, ein Bild des optischen Markers zu erfassen, und die beschriebene Steuervorrichtung. Die Erfassungsvorrichtung weist vorzugsweise eine Kamera auf. Besonders bevorzugt ist die Kamera eine Grauwertkamera, oder alternativ bevorzugt eine Farbkamera.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: einen optischen Marker, welcher ausgebildet ist, zur Erkennung mittels eines Verfahrens gemäß einem bevorzugten Ausführungsbeispiel der Erfindung,
- Figur 2: einen alternativen optischen Marker,
- Figur 3: einen Schritt bei der Durchführung des Verfahrens,
- Figur 4: einen weiteren Schritt bei der Durchführung des Verfahrens, und
- Figur 5: einen weiteren Schritt bei der Durchführung des Verfahrens.

### Bevorzugte Ausführungsformen der Erfindung

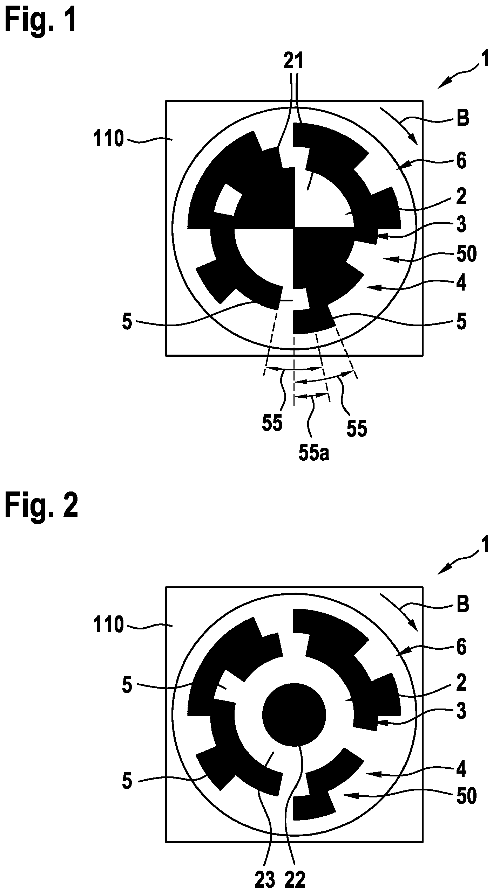

Figur 1 zeigt einen optischen Marker 1, welcher ausgebildet ist, zur Erkennung mittels eines Verfahrens gemäß einem bevorzugten Ausführungsbeispiel der Erfindung. Bei dem optischen Marker 1 handelt es sich um einen codierten Marker, welche zur maschinellen Bildverarbeitung und in der Photogrammetrie zum Beispiel zur Vermessung von Flächen oder Objekten verwendet werden kann.

Der optische Marker 1 ist kreisförmig und umfasst ein Markerzentrum 2 und mehrere das Markerzentrum 2 umgebende Ringe 3, 4, 6. Das Markerzentrum 2 ist in Form einer Schachbrettecke ausgebildet. Das heißt, das Markerzentrum 2 ist ein Kreis, welcher vier punktsymmetrisch angeordnete Quadranten 21 aufweist. Jeweils zwei sich gegenüberliegende Quadranten 21 weisen dabei die selbe Farbe auf, wobei nebeneinanderliegende Quadranten 21 unterschiedliche Farben aufweisen. Im Detail sind die Quadranten 21 entweder schwarz oder weiß, sodass diese sich kontrastreich voneinander abheben.

Weiterhin umfasst der optische Marker 1 einen ersten Ring 3, welcher radial außerhalb unmittelbar an das Markerzentrum 2 angrenzt, und einen zweiten Ring 4, welcher radial außerhalb des ersten Rings 3 unmittelbar an diesen angrenzt. Jeder dieser beiden Ringe 3, 4 ist gleichmäßig in eine Vielzahl an Sektoren 5 unterteilt. Dadurch weist jeder Sektor 5 der beiden Ringe 3, 4 einen gleichen Mittelpunktswinkel 55 auf. Die Sektoren 5 des ersten Rings 3 und die Sektoren 5 des zweiten Rings sind um den halben Mittelpunktswinkel 55a in Umfangsrichtung gegeneinander verdreht. Dadurch fluchten die radial ausgerichteten Begrenzungen der Sektoren 5 der verschiedenen Ringe 3, 4 nicht miteinander, sodass eine leichtere und deutlichere Unterscheidbarkeit möglich ist.

Jeder Sektor 5 weist genau eine von zwei Farben auf, nämlich entweder schwarz oder weiß. Insbesondere steht jede Farbe hierbei für genau eine Zahl, vorzugsweise entweder 0 oder 1. Dadurch bildet jeder der beiden Ringe 3, 4 einen Code, welcher sich in Umfangsrichtung B um den Ring 3, 4 erstreckt. Der Code ermöglicht dabei eine eindeutige Identifizierung und Unterscheidbarkeit des optischen Markers 1.

Die Sektoren 5 des ersten Rings 3 sind punktsymmetrisch. Das heißt, sich jeweils bezüglich des Markerzentrums 2 gegenüberliegende Sektoren 5 des ersten Rings 3 weisen dieselbe Farbe auf. Dadurch ist der Code im ersten Ring doppelt vorhanden. Mit anderen Worten steht im ersten Ring 3 nur die Hälfte der Sektoren 5 zur Verfügung, um den Code abzubilden.

Die Sektoren 5 des zweiten Rings 4 sind punkt-antisymmetrisch. Das heißt, sich jeweils bezüglich des Markerzentrums 2 gegenüberliegende Sektoren des zweiten Rings 4 weisen unterschiedliche Farben auf. Ähnlich dem ersten Ring 3 steht damit im zweiten Ring 4 nur die Hälfte der Sektoren 5 zur Darstellung des Codes zur Verfügung. Die jeweils andere Hälfte ist durch die Bedingung der Punkt-Antisymmetrie ebenfalls vordefiniert, wobei hierdurch beispielsweise ein inverser Code abgebildet wird.

Um einen eindeutigen Beginn des Codes im zweiten Ring 4 ermitteln zu können, weist der zweite Ring 4 einen Startpunkt 50 auf, welcher durch vier in Umfangsrichtung aufeinanderfolgende Sektoren 5 mit einer vordefinierten Farbfolge gebildet wird. Im Detail ist der Startpunkt 50 durch Sektoren 5 mit der folgenden Farbfolge gebildet: weiß, weiß, weiß, schwarz.

Um beispielsweise einen Beginn des Codes im ersten Ring 3 zu erkennen, kann der Startpunkt 50 auch als Ausgangspunkt für das Lesen des Codes im ersten Ring 3 genutzt werden, indem das Lesen im ersten Ring 3 radial fluchtend mit dem Startpunkt 50 am zweiten Ring 4 beginnt.

Radial außerhalb und unmittelbar an den zweiten Ring 4 angrenzend ist ein einfarbiger, weißer Endring 6 vorgesehen, welcher eine äußere Begrenzung des optischen Markers 1 bildet. Zur Hervorhebung des Endrings 6 ist der optische Marker 1 vor einem Hintergrund 110 mit grauem Farbverlauf dargestellt.

Figur 2 zeigt eine alternative Ausgestaltung des optischen Markers 1, welcher im Unterschied zum optischen Marker der Figur 1 ein alternatives Markerzentrum 2 aufweist. Der optische Marker 1 der Figur 2 weist dabei ein Markerzentrum 2 in Form eines einfarbigen, schwarzen Punkts 22, welcher von einem einfarbigen, weißen Ring 23 umgeben ist, auf.

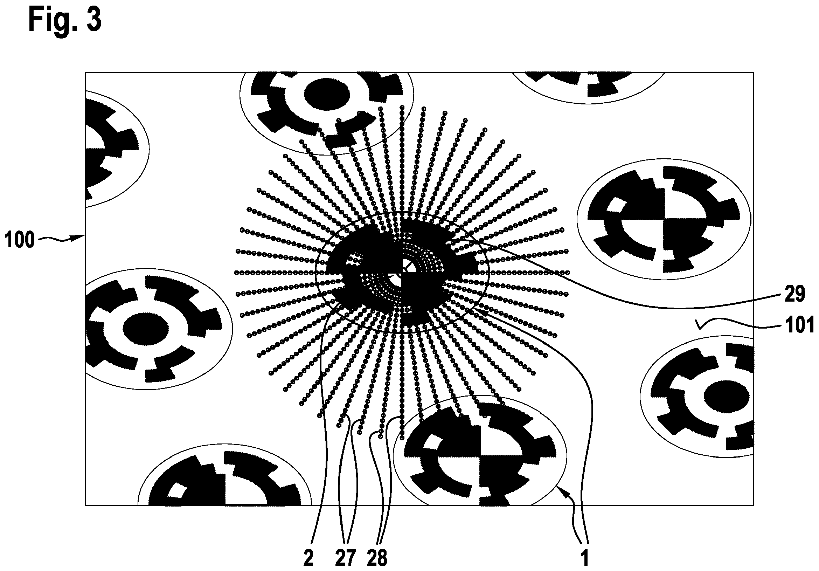

Das Verfahren zur Erkennung des optischen Markers 1 wird nachfolgend in Bezug auf die Figuren 3 bis 6 beschrieben. Das Verfahren kann dabei für beide in den Figuren 1 und 2 gezeigten Marker 1 gleichermaßen verwendet werden.

Dabei wird zunächst ein Bild 100 des optischen Markers 1 erfasst. Wie in der Figur 3 zu erkennen, in welcher ein derartiges Bild 100 beispielhaft dargestellt ist, können beispielsweise mehrere solcher optischer Marker 1 an einem Objekt 101 angebracht sein. Erfolgt die Erfassung des Bildes 100 bei schräger Ausrichtung des Objekts 101, so ist der optische Marker 1 im Bild 100 verzerrt dargestellt. Da der optische Marker 1 im vorliegenden Ausführungsbeispiel (vgl. Figur 1) kreisrund ist, ist dieser im Bild 100 zu einer Ellipse verzerrt.

In der Figur 3 ist dabei ein zweiter Schritt des Verfahrens nach dem Erfassen des Bildes 100 angedeutet. Hierbei wird der optische Marker 1 erfasst, indem zunächst das Markerzentrum 2 erkannt und lokalisiert wird und in dieses ein virtueller Mittelpunkt 29 gelegt wird. Ausgehend vom virtuellen Mittelpunkt 29 wird der optische Marker 1 entlang einer Vielzahl von sich strahlenförmig radial und gleichmäßig vom virtuellen Mittelpunkt 29 aus erstreckenden Strahlen 27 in radialer Richtung abgetastet. Dabei entspricht eine Anzahl der Strahlen 27 mindestens dem doppelten der Anzahl an Sektoren 5 pro Ring 3, 4. Entlang jedem der Strahlen 27 wird an gleichmäßig verteilten Punkten 28 jeweils ein Grauwert des Bildes 100 erfasst.

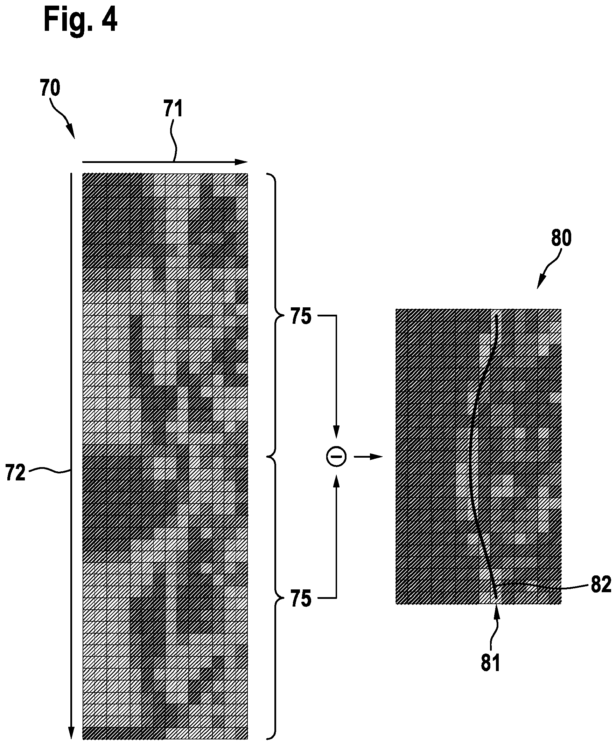

Im nächsten Schritt werden die erfassten Grauwerte von bezüglich dem Markerzentrum 2 punktsymmetrischer Bereiche 75 voneinander subtrahiert. Dieser Schritt ist vereinfacht in der Figur 4 dargestellt. Zur besseren Anschaulichkeit sind die erfassten Grauwerte dabei in der linken Abbildung der Figur 4 als Abwicklung 70 dargestellt. Dabei zeigt die Achse 71 den Radius und die Achse 72 den Kreiswinkel, insbesondere ausgehend vom Startpunkt 50. Die gekennzeichneten Bereiche 75 deuten dabei jeweils die punktsymmetrischen Bereiche an. Durch Subtraktion dieser Bereiche 75 ergibt sich die rechts abgebildete resultierende Grauwerte-Differenz 80.

Aufgrund des punkt-antisymmetrischen zweiten Rings 4 ergeben sich nach der Subtraktion hohe Differenzen 81 der Grauwerte in dem Abbild der resultierenden Grauwerte-Differenz 80. Analog ergeben sich durch den punkt-symmetrischen ersten Ring 3 niedrige Differenzen. Anhand der hohen Differenzen 81 kann die Verzerrung des optischen Markers 1 ermittelt. Hierfür wird eine Linie 81 ermittelt, welche den Verlauf der höchsten Differenzen 82 darstellt. Anhand dieser Linie 81, insbesondere anhand der Krümmung und Lage der Linie 81, werden Ellipsenparameter des verzerrten optischen Markers 1 bestimmt.

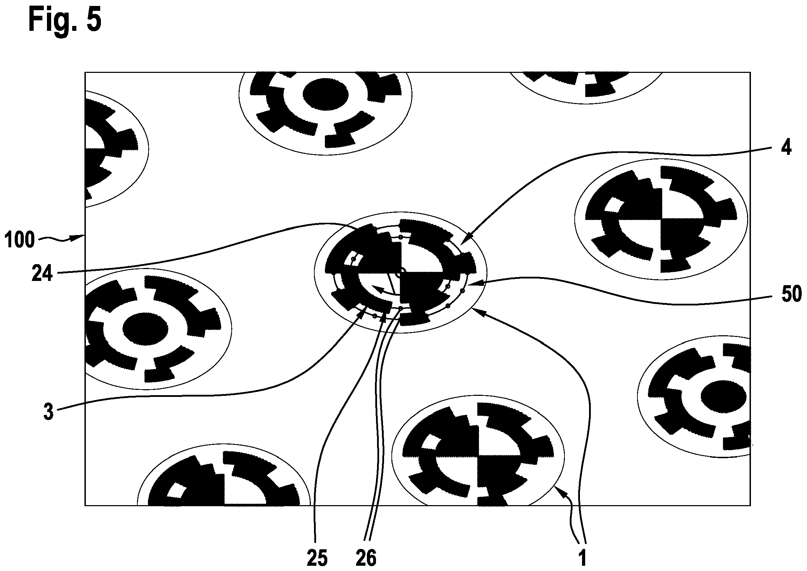

Basierend auf den Ellipsenparametern wird eine virtuelle Ellipse 25 erzeugt, welche im nächsten Schritt des Verfahrens in das Bild 100 eingefügt wird. Dieser Schritt ist in der Figur 5 schematisch dargestellt. Die virtuelle Ellipse 25 ist dabei durch die entsprechende Bestimmung der Ellipsenparameter geometrisch ähnlich zu den beiden Ringen 3, 4. Die virtuelle Ellipse 25 kann somit als eine Transformation angesehen werden, welche die Verzerrung des eigentliche kreisförmigen optischen Markers 1 widerspiegelt.

Die virtuelle Ellipse 25 dient dabei als Referenz für das Lesen des Codes des optischen Markers 1. Hierfür wird das Bild 100 entlang einer Umfangsrichtung 24 der virtuellen Ellipse, beispielsweise im Uhrzeigersinn, abgetastet. Dabei kann das Bild 100 entlang gleichmäßig über den Umfang der virtuellen Ellipse 25 verteilten Punkten 26 abgetastet werden, wobei die Grauwerte des Bilds 100 jeweils an diesen Punkten 26 bestimmt werden. Die Anzahl der Punkte 26 entspricht der Anzahl der Sektoren 5 pro Ring 3, 4.

Das Lesen des Codes beginnt dabei basierend auf dem vorher ermittelten Startpunkt 50. Vorzugsweise stellt dabei im zweiten Ring 4 derjenige Sektor 5, welcher die bezüglich der Umfangsrichtung B erste Stelle des Startpunkts 50 bildet, die erste Stelle des Codes dar. Alternativ kann der Startpunkt 50 auch nicht als Teil des Codes angesehen werden. Im ersten Ring 3 kann als erste Stelle des Codes beispielsweise der in Umfangsrichtung B erste vollständig innerhalb eines mit dem Startpunkt 50 fluchtenden Bereichs liegende Sektor 5 ermittelt werden.

Somit können anhand der virtuellen Ellipse 25 zeitgleich oder nacheinander die beiden Ringe 3, 4 genau abgetastet und die Farben der Sektoren 5 der Ringe 3, 4 erfasst werden, um daraus den Code zu bestimmen.

## Patentansprüche

1. Verfahren zur Erkennung optischer Marker (1), umfassend die Schritte:
- Bereitstellen (9) eines optischen Markers (1), welcher ein Markerzentrum (2) und zumindest zwei das Markerzentrum (2) umgebende, insbesondere kreisringförmige, Ringe (3, 4) aufweist, wobei jeder der Ringe (3, 4) eine Vielzahl an Sektoren (5) aufweist, wobei jeder Sektor (5) genau eine von zumindest zwei Farben aufweist, sodass jeder Ring (3, 4) einen Code bildet;
- Erfassen (10) eines Bilds (100) des optischen Markers (1); und
- Erkennen (11) des Markerzentrums (2) im Bild (100);
**dadurch gekennzeichnet, dass**
- die Sektoren (5) eines ersten Rings (3) des optischen Markers (1) zum Markerzentrum (2) punktsymmetrisch und die Sektoren (5) eines zweiten Rings (4) punkt-antisymmetrisch sind,
- wobei das Verfahren ferner die Schritte umfasst:
- Subtraktion (12) von Farbwerten von bezüglich dem Markerzentrum (2) punktsymmetrischer Bereiche (75) des Bilds (100);
- Ermitteln (13) einer Transformation, welche eine Verzerrung des optischen Markers (1) im Bild (100) widerspiegelt, basierend auf dem Ergebnis der Subtraktion (12); und
- Lesen (14) des Codes basierend auf der ermittelten Transformation.

2. Verfahren nach Anspruch 1, wobei die Transformation in Form von Ellipsenparametern des verzerrten optischen Markers (1) ermittelt wird.

3. Verfahren nach Anspruch 2, wobei die Ellipsenparameter basierend auf den Bereichen (82) mit den höchsten Differenzen der Farbwerte nach der Subtraktion ermittelt werden.

4. Verfahren nach einem der Ansprüche 2 oder 3, wobei eine virtuelle Ellipse (25) mit den ermittelten Ellipsenparametern in das Bild (100) des optischen Markers (1) auf einen der beiden verzerrten Ringe (3, 4) gelegt wird, und wobei zum Lesen des Codes die Sektoren (5) des Rings (3, 4) entlang einer Umfangsrichtung (24) der virtuellen Ellipse (25) erfasst werden.

5. Verfahren nach Anspruch 4, wobei beim Lesen (14) ein Startpunkt (50), welcher durch eine vordefinierte Farbfolge einer vorbestimmten Anzahl an aufeinanderfolgenden Sektoren (5) gebildet ist, ermittelt wird, und wobei ausgehend vom Startpunkt (50) der durch die Sektoren (5) des Rings (3,4) gebildete Code gelesen wird.

6. Verfahren nach Anspruch 5, wobei der zweite Ring (4) den Starpunkt (50) aufweist, und wobei insbesondere das Lesen (14) des Codes des ersten Rings (3) radial fluchtend mit dem Startpunkt (50) im zweiten Ring (4) beginnt.

7. Verfahren nach einem der vorhergehenden Ansprüche, wobei jeder Sektor (5) einen identischen Mittelpunktswinkel (55) aufweist, und wobei die Sektoren (5) des ersten Rings (3) gegen die Sektoren (5) des zweiten Rings (4) um die Hälfte des Mittelpunktswinkels (55) verdreht sind.

8. Verfahren nach einem der vorhergehenden Ansprüche, wobei zur Subtraktion (12) der Farbwerte ein radiales Abtasten des Markers (1) ausgehend vom Markerzentrum (2) und entlang einer Vielzahl von sich strahlenförmig vom Markerzentrum (2) aus erstreckenden Strahlen (27) erfolgt.

9. Verfahren nach einem der vorhergehenden Ansprüche, wobei der zweite Ring (4) radial außerhalb des ersten Rings (3) angeordnet ist.

10. Verfahren nach einem der vorhergehenden Ansprüche, wobei der optische Marker (1) ferner einen einfarbigen Endring (6) aufweist, welcher radial außerhalb der weiteren Ringe (3, 4) angeordnet ist.

11. Verfahren nach einem der vorhergehenden Ansprüche, wobei das Markerzentrum (2) in Form einer Schachbrettecke oder in Form eines einfarbigen Punkts (22), welcher von einem einfarbigen Ring (23) anderer Farbe umgeben ist, gebildet ist.

12. Verfahren nach einem der vorhergehenden Ansprüche, wobei jeder Ring (3, 4) mindestens 16 Sektoren aufweist.

13. Verfahren nach einem der vorhergehenden Ansprüche, wobei jeder Sektor (5) entweder schwarz oder weiß ist.

14. Steuervorrichtung, welche eingerichtet ist zur Durchführung eines Verfahrens nach einem der vorhergehenden Ansprüche.

15. System zur Erkennung optischer Marker, umfassend:
- eine Erfassungsvorrichtung, welche eingerichtet ist zum Erfassen eines Bilds (100) des optischen Markers (1), und
- eine Steuervorrichtung nach Anspruch 14.

## Claims

1. Method for recognizing optical markers (1), comprising the steps of:
- providing (9) an optical marker (1) having a marker centre (2) and at least two, in particular circular, rings (3, 4) surrounding the marker centre (2), each of the rings (3, 4) having a multiplicity of sectors (5), each sector (5) having exactly one of at least two colours such that each ring (3, 4) forms a code;
- capturing (10) an image (100) of the optical marker (1); and
- recognizing (11) the marker centre (2) in the image (100);
**characterized in that**
- the sectors (5) in a first ring (3) of the optical marker (1) are point-symmetric with respect to the marker centre (2) and the sectors (5) in a second ring (4) are point-antisymmetric,
- the method also comprising the steps of:
- subtracting (12) colour values of regions (75) in the image (100) which are point-symmetric with respect to the marker centre (2);
- determining (13) a transformation which reflects a distortion of the optical marker (1) in the image (100), on the basis of the result of the subtraction (12); and
- reading (14) the code on the basis of the determined transformation.

2. Method according to Claim 1, wherein the transformation is determined in the form of ellipse parameters for the distorted optical marker (1).

3. Method according to Claim 2, wherein the ellipse parameters are determined on the basis of the regions (82) with the greatest colour value differences following the subtraction.

4. Method according to any of Claims 2 and 3, wherein a virtual ellipse (25) having the determined ellipse parameters is overlaid on one of the two distorted rings (3, 4) in the image (100) of the optical marker (1), and wherein the sectors (5) of the ring (3, 4) are registered along a circumferential direction (24) of the virtual ellipse (25) for the purpose of reading the code.

5. Method according to Claim 4, wherein a starting point (50) formed by a predefined colour sequence in a predetermined number of successive sectors (5) is determined during the reading (14), and wherein the code formed by the sectors (5) of the ring (3, 4) is read proceeding from the starting point (50).

6. Method according to Claim 5, wherein the starting point (50) is on the second ring (4), and wherein in particular the reading (14) of the code of the first ring (3) starts radially flush with the starting point (50) on the second ring (4).

7. Method according to any of the preceding claims, wherein each sector (5) has an identical central angle (55), and wherein the sectors (5) of the first ring (3) are rotated in relation to the sectors (5) of the second ring (4) by half the central angle (55) .

8. Method according to any of the preceding claims, wherein the marker (1) is scanned radially, proceeding from the marker centre (2) and along a multiplicity of rays (27) extending in ray-like form from the marker centre (2), for the purpose of subtracting (12) the colour values.

9. Method according to any of the preceding claims, wherein the second ring (4) is arranged radially outside of the first ring (3).

10. Method according to any of the preceding claims, wherein the optical marker (1) further has a monochrome end ring (6) arranged radially outside of the further rings (3, 4).

11. Method according to any of the preceding claims, wherein the marker centre (2) is formed in the form of a chequerboard corner or in the form of a monochrome point (22), which is surrounded by a monochrome ring (23) in a different colour.

12. Method according to any of the preceding claims, wherein each ring (3, 4) has at least 16 sectors.

13. Method according to any of the preceding claims, wherein each sector (5) is either black or white.

14. Control device configured to carry out a method according to any of the preceding claims.

15. System for recognizing optical markers, comprising:
- a capturing device configured to capture an image (100) of the optical marker (1) and
- a control device according to Claim 14.

## Revendications

1. Procédé de détection de marqueurs optiques (1), ledit procédé comprenant les étapes suivantes :
- fournir (9) un marqueur optique (1) qui présente un centre de marqueur (2) et au moins deux anneaux (3, 4), notamment circulaires, entourant le centre de marqueur (2), chacun des anneaux (3, 4) comportant une pluralité de secteurs (5), chaque secteur (5) ayant exactement une couleur parmi au moins deux couleurs de sorte que chaque anneau (3, 4) forme un code ;
- acquérir (10) une image (100) du marqueur optique (1) ; et
- détecter (11) le centre de marqueur (2) dans l'image (100) ;
**caractérisé en ce que**
- les secteurs (5) d'un premier anneau (3) du marqueur optique (1) sont à symétrie ponctuelle, et les secteurs (5) d'un deuxième anneau (4) sont à symétrie ponctuelle, par rapport au centre de marqueur (2),
- le procédé comprenant en outre les étapes suivantes :
- soustraire (12) des valeurs chromatiques de zones (75) de l'image (100) qui sont à symétrie ponctuelle par rapport au centre de marqueur (2) ;
- déterminer (13) une transformation qui reflète une distorsion du marqueur optique (1) dans l'image (100), sur la base du résultat de la soustraction (12) ; et
- lire (14) le code sur la base de la transformation déterminée.

2. Procédé selon la revendication 1, la transformation étant déterminée sous la forme de paramètres d'ellipse du marqueur optique distordu (1).

3. Procédé selon la revendication 2, les paramètres d'ellipse étant déterminés sur la base des zones (82) dont les valeurs chromatiques présentent les différences les plus élevées après la soustraction.

4. Procédé selon l'une des revendications 2 ou 3, une ellipse virtuelle (25) ayant les paramètres d'ellipse déterminés étant placée dans l'image (100) du marqueur optique (1) sur l'un des deux anneaux distordus (3, 4), et les secteurs (5) de l'anneau (3, 4) étant acquis selon une direction circonférentielle (24) de l'ellipse virtuelle (25) afin de lire le code.

5. Procédé selon la revendication 4, un point de départ (50) qui est formé par une séquence chromatique prédéfinie d'un nombre prédéfini de secteurs successifs (5) étant déterminé lors de la lecture (14), et le code formé par les secteurs (5) de l'anneau (3, 4) étant lu à partir du point de départ (50).

6. Procédé selon la revendication 5, le deuxième anneau (4) ayant le point de départ (50), et en particulier la lecture (14) du code du premier anneau (3) commençant en étant radialement aligné avec le point de départ (50) dans le deuxième anneau (4).

7. Procédé selon l'une des revendications précédentes, chaque secteur (5) ayant un angle au centre identique (55), et les secteurs (5) du premier anneau (3) étant tournés vers les secteurs (5) du deuxième anneau (4) de la moitié de l'angle au centre (55) .

8. Procédé selon l'une des revendications précédentes, pour effectuer la soustraction (12) des valeurs chromatiques, un balayage radial du marqueur (1) étant effectué à partir du centre de marqueur (2) et le long d'une pluralité de faisceaux (27) rayonnant à partir du centre du marqueur (2).

9. Procédé selon l'une des revendications précédentes, le deuxième anneau (4) étant situé radialement à l'extérieur du premier anneau (3).

10. Procédé selon l'une des revendications précédentes, le marqueur optique (1) comprenant en outre un anneau d'extrémité monochromatique (6) qui est situé radialement à l'extérieur des autres anneaux (3, 4) .

11. Procédé selon l'une des revendications précédentes, le centre de marqueur (2) étant sous la forme d'un coin en échiquier ou sous la forme d'un point monochromatique (22) qui est entouré d'un anneau monochromatique (23) de couleur différente.

12. Procédé selon l'une des revendications précédentes, chaque anneau (3, 4) comportant au moins 16 secteurs.

13. Procédé selon l'une des revendications précédentes, chaque secteur (5) étant soit noir, soit blanc.

14. Dispositif de commande qui est conçu pour mettre en œuvre un procédé selon l'une des revendications précédentes.

15. Système de détection de marqueurs optiques, ledit système comprenant :
- un dispositif d'acquisition qui est conçu pour acquérir une image (100) du marqueur optique (1), et
- un dispositif de commande selon la revendication 14.
